# EUROPÄISCHE PATENTSCHRIFT

(11) **EP 1 382 311 B1**
(45) Veröffentlichungstag und Bekanntmachung des Hinweises auf die Patenterteilung: **04.10.2006**
(21) Anmeldenummer: 03014306.9
(22) Anmeldetag: 25.06.2003
(51) Int. Cl.: A61C 5/02, B24B 19/02, B24B 19/04

(54) **Wurzelkanalinstrument**
Root canal instrument
Instrument canalaire pour endodontie

(30) Priorität: 20.07.2002 DE 10233030
(43) Veröffentlichungstag der Anmeldung: 21.01.2004
(73) Patentinhaber: Gebr. Brasseler GmbH & Co. KG, D-32631 Lemgo (DE)
(72) Erfinder: Danger, Karl-Heinz, 32758 Detmold (DE)
(74) Vertreter: Weber, Joachim

(56) Entgegenhaltungen:
- US-A- 4 299 571
- US-A- 5 692 902
- US-A- 5 882 198
- US-A- 6 042 376
- US-B1- 6 315 558
- US-B1- 6 419 488

## Beschreibung

Die Erfindung bezieht sich auf ein Wurzelkanalinstrument für den manuellen Einsatz gemäß dem Oberbegriff des Hauptanspruchs.

Im Einzelnen betrifft die Erfindung ein Wurzelkanalinstrument für den manuellen Einsatz, welches ein Griffstück aufweist, an welchem ein länglicher, sich verjüngender Schaft befestigt ist. Dieser ist mit zumindest einer spiralförmig um die Längsachse des Schafts gewendelten Schneide versehen.

Im Gegensatz zu Wurzelkanalinstrumenten, welche für die maschinelle Aufbereitung konzipiert sind, weisen Wurzelkanalinstrumente für den manuellen Einsatz üblicherweise einen konischen oder sich in ähnlicher Weise verjüngenden Schaft auf, an welchem eine oder mehrere im Wesentlichen spiralförmige Schneiden ausgebildet sind. Der Stand der Technik zeigt hierzu vielfältige Ausgestaltungsvarianten. Nur beispielhaft sei auf die EP 1 108 395 A2 verwiesen. Ein ähnliches Wurzelkanalinstrument zeigt auch die EP 019 356 B1.

Die bekannten Wurzelkanalinstrumente sind jeweils mit einem quadratischen, dreieckigen oder rhombischen Querschnitt versehen. Bei einem quadratischen Querschnitt ergeben sich insgesamt vier Schneiden, ein dreieckiger Querschnitt umfasst demgegenüber nur drei Schneiden. Bei den rhombischen Querschnitten weichen zwei der Ecken oder Kanten vom Drehkreis zurück, sodass nur zwei einander gegenüberliegende Schneiden ausgebildet sind.

Derartige Wurzelkanalinstrumente sind auch nach ISO 6360 genormt. Hierbei unterliegen auch die jeweiligen Arbeitslängen und die entsprechenden Durchmesser einer Normung.

Die US-A 6,042,376 beschreibt ein Wurzelkanalinstrument, bei welchem ein konusförmiger, einen ovalen Querschnitt aufweisender Arbeitsteil vorgesehen ist, welcher mit einer gewendelten, umlaufenden Schneide versehen ist. Diese steht nicht über den Querschnitt vor, sondern ist auf der Umfangslinie des ovalen Querschnitts ausgebildet.

Der Erfindung liegt die Aufgabe zugrunde, ein Wurzelkanalinstrument der Eingangs genannten Art zu schaffen, welches bei einfacher und kostengünstiger Herstellbarkeit gute mechanische Eigenschaften sowie gute Schneidleistungen aufweist.

Erfindungsgemäß wird die Aufgabe durch die Merkmale des Hauptanspruchs gelöst, die Unteransprüche zeigen weitere vorteilhafte Ausgestaltungen der Erfindung.

Erfindungsgemäß ist somit vorgesehen, dass der Schaft eine Querschnittsform aufweist, welche an zwei gegenüberliegenden Seiten jeweils mit einer Schneide versehen ist und deren die Schneiden verbindende Seitenflächen jeweils konvex ausgebildet sind.

Das erfindungsgemäße Wurzelkanalinstrument zeichnet sich durch eine Reihe erheblicher Vorteile aus.

Durch die erfindungsgemäß gewählte Querschnittsform, welche auch als Vogelzungenquerschnitt oder linsenförmiger Querschnitt bezeichnet werden kann, ergeben sich lediglich zwei zu bearbeitende Seitenflächen, nämlich die beiden konvex ausgebildeten, die Schneiden verbindenden Seitenflächen. Gegenüber rhombischen Querschnittsformen reduziert sich somit der Bearbeitungsaufwand ganz erheblich.

Weiterhin weist die erfindungsgemäße Querschnittsform ein hohes Maß an Stabilität auf, sodass das Wurzelkanalinstrument mechanisch hoch belastbar ist, ohne dass die Gefahr des Versagens besteht.

In einer besonders günstigen Weiterbildung der Erfindung ist vorgesehen, dass die Schneide, bezogen auf eine die beiden Schneiden verbindende Gerade bzw. Ebene, symmetrisch ausgebildet ist. Da der Schaft mit den Schneiden gewendelt oder spiralförmig ist, versteht es sich, dass sich im strengen Sinne keine Mittelebene definieren lässt. Die angegebene Symmetrie bezieht sich somit auf die jeweilige Schnittebene des Wurzelkanalinstruments, in welcher die beiden Schneiden durch eine Gerade verbunden werden. Die beschriebene symmetrische Ausgestaltung der Schneiden führt zu dem Vorteil, dass die Schneiden in beiden Drehrichtungen gleich gute Schneideigenschaften aufweisen, da sich gleiche Wirkwinkel der Schneide ergeben.

Besonders günstig ist es, wenn die beiden Schneiden des Wurzelkanalinstruments gleich ausgebildet sind.

Die Tangentenwinkel an den Schneiden sind in einem Bereich zwischen 70° und 110° ausgebildet. Die Tangentenwinkel richten sich nach der Arbeitsteillänge des Wurzelkanalinstruments bzw. nach dem jeweiligen Durchmesser.

Erfindungsgemäß sind die beiden Seitenflächen bevorzugter Weise bogenförmig gekrümmt. Dabei kann es günstig sein, eine kreisbogenförmige Krümmung vorzusehen. Es ist jedoch auch jede andere geometrische Krümmung, beispielsweise eine elliptische Krümmung möglich.

Weiterhin ist es vorteilhaft, wenn die beiden Seitenflächen zu der die Schneiden verbindenden Geraden bzw. Ebenen symmetrisch ausgebildet sind. Es ergeben sich somit in beiden Drehrichtungen gleiche Widerstandsmomente, sodass die mechanische Belastbarkeit des Wurzelkanalinstruments für beide Drehrichtungen gleich ist.

Um ein Verklemmen in dem Wurzelkanal eines Zahnes zu vermeiden, kann es günstig sein, wenn der vordere Bereich des Schafts nicht-schneidend ausgebildet ist.

Im Folgenden wird die Erfindung anhand von Ausführungsbeispielen in Verbindung mit der Zeichnung beschrieben. Dabei zeigt:
- Fig. 1: eine schematische Seitenansicht eines erfindungsgemäßen Wurzelkanalinstruments,
- Fig. 2: eine Schnittansicht durch den Arbeitsteil des Schaftes gemäß einer ersten Ausgestaltungsvariante, und
- Fig. 3: eine Schnittansicht, analog Fig. 2, einer weiteren Ausgestaltungsvariante.

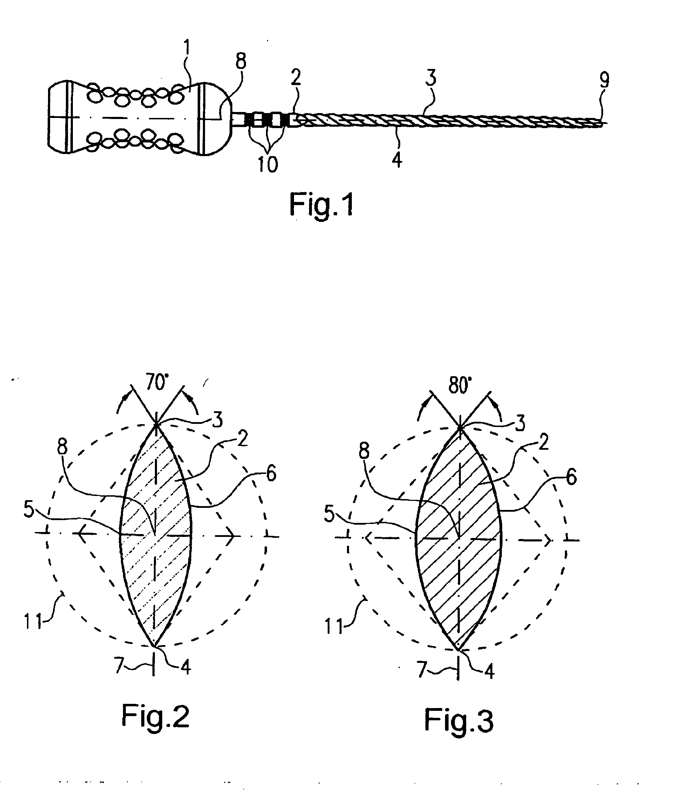

Das erfindungsgemäße Wurzelkanalinstrument weist, wie in Fig. 1 gezeigt, ein Griffstück 1 aus, an welchem ein Schaft 2 befestigt ist. Dieser ist hinsichtlich seiner Hüllkurve rotationssymmetrisch zu einer Längsachse 8. Der an den Griff 1 angrenzende Bereich des Schaftes 2 kann glatt ausgebildet und mit Markierungsringen 10 versehen sein.

Ein vorderer Bereich 9 des Schafts 2 kann nicht-schneidend ausgebildet sein, während der restliche, den Arbeitsteil des Schaftes 2 bildende Bereich mit zwei gewendelten oder spiralförmigen Schneiden 3, 4 versehen ist.

In den Fig. 2 und 3 sind jeweils senkrechte Schnitte, bezogen auf die Längsachse 8 dargestellt.

Die Fig. 2 und 3 zeigen zunächst eine kreisförmige Hüllkurve 11, welche sich bei einer Drehung des Wurzelkanalinstruments um seine Längsachse 8 ergibt.

Aus den Querschnittsformen der Fig. 2 und 3 ergibt sich, dass der Schaft 2 mit zwei Schneiden 3, 4 versehen ist, welche jeweils auf der Hüllkurve 11 liegen. Die beiden Schneiden 3, 4 werden jeweils durch Seitenflächen 5, 6 miteinander verbunden, welche konvex ausgebildet sind. Es ergibt sich somit ein linsenförmiger oder vogelzungenartiger Querschnitt.

Die beiden Schneiden 3, 4 sind zueinander gleich ausgebildet. Weiterhin sind sie symmetrisch zu einer die beiden Schneiden 3, 4 verbindenden Geraden 7 (Mittelgeraden) ausgebildet. Im strengen Sinne liegt keine Mittelebene vor, da der Arbeitsbereich des Schafts 2 gewendelt ausgebildet ist.

Die Fig. 2 und 3 zeigen weiterhin unterschiedliche Tangentenwinkel an den Schneiden 3, 4. Der Tangentenwinkel gemäß Fig. 2 beträgt 70°, während der Tangentenwinkel gemäß Fig. 3 80° beträgt. Es versteht sich, dass bei einem größeren Tangentenwinkel auch die Balligkeit, d.h. die Breite des vogelzungenartigen oder linsenartigen Querschnitts größer ist. Die Wahl des Tangentenwinkels kann in Abhängigkeit von der jeweiligen Dimensionierung des Wurzelkanalinstruments, insbesondere der Länge und des Durchmessers des Schaftes 2 gewählt werden.

Wie sich aus oben stehender Beschreibung ergibt, ist das erfindungsgemäße Wurzelkanalinstrument besonders kostengünstig herstellbar, da lediglich die beiden Seitenflächen 5, 6 entsprechend bearbeitet werden müssen, um zu der gewünschten Querschnittsform zu gelangen.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

## Patentansprüche

1. Wurzelkanalinstrument für den manuellen Einsatz mit einem Griffstück (1), an welchem ein länglicher, sich verjüngender Schaft (2) befestigt ist, welcher mit zumindest einer spiralförmig um die Längsachse (8) des Schafts (2) gewendelten Schneide versehen ist, wobei der Schaft (2) eine Querschnittsform aufweist, welche an zwei gegenüberliegenden Seiten jeweils mit einer Schneide (3, 4) versehen ist und deren die Schneiden (3, 4) verbindende Seitenflächen (5, 6) jeweils konvex ausgebildet sind, **dadurch gekennzeichnet, dass** der Tangentenwinkel an der Schneide (3, 4) in einem Bereich zwischen 70° und 110° ausgebildet ist.

2. Wurzelkanalinstrument nach Anspruch 1, **dadurch gekennzeichnet, dass** die Schneide (3, 4), bezogen auf eine die beiden Schneiden (3, 4) verbindende Gerade (7) bzw. Ebene symmetrisch ausgebildet ist.

3. Wurzelkanalinstrument nach einem der Ansprüche 1 bis 2, **dadurch gekennzeichnet, dass** die beiden Schneiden (3, 4) gleich ausgebildet sind.

4. Wurzelkanalinstrument nach einem der Ansprüche 1 bis 3, **dadurch gekennzeichnet, dass** die beiden Seitenflächen (5, 6) bogenförmig gekrümmt sind.

5. Wurzelkanalinstrument nach Anspruch 4, **dadurch gekennzeichnet, dass** die beiden Seitenflächen (5, 6) kreisbogenförmig gekrümmt sind.

6. Wurzelkanalinstrument nach einem der Ansprüche 1 bis 5, **dadurch gekennzeichnet, dass** die beiden Seitenflächen (5, 6) zu der die Schneiden (3, 4) verbindenden Geraden (7) bzw. Ebenen symmetrisch ausgebildet sind.

7. Wurzelkanalinstrument nach einem der Ansprüche 1 bis 6, **dadurch gekennzeichnet, dass** der vordere Bereich (9) des Schafts (2) nicht-schneidend ausgebildet ist.

## Claims

1. Root canal instrument for manual use, having a grip piece (1) to which an elongated, tapering shaft (2) is fixed, which is provided with a cutting edge wound spirally around the longitudinal axis (8) of the shaft (2), the shaft (2) having a cross-sectional shape which is in each case provided with a cutting edge (3, 4) on two opposite sides and whose side surfaces (5, 6) connecting the cutting edges (3, 4) are in each case convex, **characterized in that** the tangent angle to the cutting edge (3, 4) is formed in a range between 70° and 110°.

2. Root canal instrument according to Claim 1, **characterized in that** the cutting edge (3, 4) is formed symmetrically in relation to a straight line (7) or plane joining the two cutting edges (3, 4).

3. Root canal instrument according to one of Claims 1 to 2, **characterized in that** the two cutting edges (3, 4) are formed identically.

4. Root canal instrument according to one of Claims 1 to 3, **characterized in that** the two side surfaces (5, 6) are curved in the shape of an arc.

5. Root canal instrument according to Claim 4, **characterized in that** the two side surfaces (5, 6) are curved in the shape of a circular arc.

6. Root canal instrument according to one of Claims 1 to 5, **characterized in that** the two side surfaces (5, 6) are formed symmetrically in relation to the straight lines (7) or planes joining the cutting edges (3, 4).

7. Root canal instrument according to one of Claims 1 to 6, **characterized in that** the front region (9) of the shaft (2) is of non-cutting form.

## Revendications

1. Instrument pour canal radiculaire destiné à une utilisation manuelle, comprenant une poignée (1) dans laquelle est fixée une tige (2) allongée allant en se rétrécissant qui est pourvue d'au moins un tranchant hélicoïdal qui s'enroule en spirale autour de l'axe longitudinal (8) de la tige (2), la tige (2) présentant une forme de section transversale pourvue respectivement d'un tranchant (3, 4) sur deux côtés opposés et dont les surfaces latérales (5, 6) reliant les tranchants (3, 4) sont respectivement convexes, **caractérisé en ce que** l'angle des tangentes au niveau du tranchant (3, 4) est compris dans une plage entre 70° et 110°.

2. Instrument pour canal radiculaire selon la revendication 1, **caractérisé en ce que** le tranchant (3, 4) est symétrique par rapport à une droite (7) ou un plan qui relie les deux tranchants (3, 4).

3. Instrument pour canal radiculaire selon l'une des revendications 1 à 2, **caractérisé en ce que** les deux tranchants (3, 4) présentent la même conformation.

4. Instrument pour canal radiculaire selon l'une des revendications 1 à 3, **caractérisé en ce que** les deux surfaces latérales (5, 6) sont incurvées de façon arquée.

5. Instrument pour canal radiculaire selon la revendication 4, **caractérisé en ce que** les deux surfaces latérales (5, 6) sont incurvées en arc de cercle.

6. Instrument pour canal radiculaire selon l'une des revendications 1 à 5, **caractérisé en ce que** les deux surfaces latérales (5, 6) sont symétriques par rapport à la droite (7) ou au plan qui relient les tranchants (3, 4).

7. Instrument pour canal radiculaire selon l'une des revendications 1 à 6, **caractérisé en ce que** la zone frontale (9) de la tige (2) n'est pas coupante.
